# EUROPEAN PATENT APPLICATION

(11) **EP 4 664 273 A1**
(43) Date of publication of application: **17.12.2025**
(21) Application number: 24181770.9
(22) Date of filing: 12.06.2024
(51) Int. Cl.: G06F 8/36, G05B 19/418, G05B 19/042, G05B 19/05, G06F 9/54

(54) **CUSTOM LIBRARY INTEGRATION INTO MTP-MODULAR AUTOMATION ENGINEERING**

(71) Applicant: ABB SCHWEIZ AG, 5400 Baden (CH)
(72) Inventor: HOERNICKE, Mario, 76829 Landau (DE); SCHOCH, Nicolai, 69120 Heidelberg (DE); STARK, Katharina, 69469 Weinheim (DE)
(74) Representative: Maiwald GmbH

(57) **Abstract**

There is disclosed a method for integrating a library into an engineering tool in industrial plant. The method comprises selecting the library comprising a first type, the first type comprising one or more library objects associated with one or more properties; importing the selected library into the engineering tool; mapping the first type to a predetermined type among a plurality of predetermined types available in one or more predetermined libraries in the engineering tool; mapping the one or more properties to one or more predetermined properties associated with one or more predetermined library objects in the mapped predetermined type; and based on the mappings, integrating the library into the engineering tool.

## Description

### FIELD OF THE INVENTION

The invention relates to custom library integration into modular automation engineering.

### BACKGROUND

Engineering teams and customers are used to engineer their solutions using an industry-specific or even customer-specific library. The modular engineering approach bases on one or more predetermined standards, for example on the Module Type Package (MTP) standard. Thus, today it is often used the MTP standard library as defined in the standard VDI/VDE/NAMUR 2658.

For most cases, however, this is not suitable. It is still fitting for the original modular automation case, but not for a world-scale plant project, for example.

Hence, a major problem that hinders engineers from using the modular engineering workflow is that the library does not fit with the customer or industry requirements.

Hence, there are several drawbacks available regarding the modular engineering workflow.

### SUMMARY

In view of the above, it is an object of the present disclosure to overcome at least part of the drawbacks available regarding the modular engineering workflow.

Therefore, to address one or more of these drawbacks, there is provided, in a first aspect, a method for integrating a library into an engineering tool in industrial plant. The method comprises selecting the library comprising a first type, wherein the first type comprises one or more library objects associated with one or more properties. The method further comprises importing the selected library into the engineering tool. The method further comprises mapping the first type to a predetermined type among a plurality of predetermined types available in one or more predetermined libraries in the engineering tool. The method further comprises mapping the one or more properties to one or more predetermined properties associated with one or more predetermined library objects in the mapped predetermined type. The method still further comprises, based on the mappings, integrating the library into the engineering tool.

It shall be noted that the predetermined library may represent a standard library, for example a standard MTP library. It shall be noted that the predetermined type may represent a standard type, for example a standard MTP type. A library may comprise one or more types, wherein a type may be understood as representing a block or a group of predetermined or preselected library objects. The selecting may comprise selecting one or more libraries from a plurality of libraries. The mappings may be bidirectional mappings. The mappings may be one-to-one mappings, one-to-many mappings, many-to-one mappings or many-to-many mappings. The mappings may also be understood as assigning. The mappings or assigning may be performed by a user, for example an engineer, who performs the mappings based on his/her expert knowledge. A predetermined property may be a standard property, for example a standard MTP property. A property may be associated with one or more library objects included in a library or type. Wherein by "property" it may be meant a specific value of a library object. This might for example be a value of a process flow, the speed of a pump, or a parameter of a service, or similar. The property may be defined in the type (i.e. in the library object) and the value is specific to the instance of the type (i.e. of an actual object).

The method according to the first aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to several examples of the present disclosure, the mapping the one or more properties may comprise, if a predetermined property among the one or more predetermined properties remains unmapped to one of the one or more properties, assigning a constant value to the unmapped predetermined property.

It shall be noted that the constant value may be set by a user.

Hence, applicability with a standard is further increased.

According to several examples of the present disclosure, the method may further comprise storing at least one of the mappings.

It shall be noted that storing at least one of the mappings may comprise storing a result from at least one of the mappings.

Hence, the results obtained from the mappings and stored in a database or file, for example, can later be reused in other projects, as well.

According to several examples of the present disclosure, importing the selected library may comprise importing the first type and a first type interface, wherein the first type interface may be indicative of at least one of inputs of the first type, outputs of the first type, one or more parameters associated with the first type, and the one or more properties associated with the first type.

It shall be noted that the inputs and outputs of a type may be understood as representing inputs and outputs of library objects included in the type or in the library comprising the type. Moreover, the term "parameter" may be used as a synonym for the term "property", wherein "parameters" may be used for those "properties" that are inputs and outputs of the type. However, handling and representation of a parameter is actually the same like with a property. Hence, a "parameter" may be understood as a "property" that is used as input or output of the library function, whereas a "property" may be understood as a predetermined or preset criterion, like a measurement range for example.

Hence, a more reliable mapping is enabled.

According to several examples of the present disclosure, the library may comprise a plurality of types including the first type, wherein each type among the plurality of types may comprise one or more library objects associated with one or more properties; and wherein the mappings may comprise mapping the plurality of types to one or more of the predetermined types and mapping the one or more properties for the plurality of types.

Hence several libraries and/or types may be processed in parallel and/or may be comprehensively considered, thereby enabling further improved mappings.

According to several examples of the present disclosure, mapping the one or more properties may comprise splitting structured data types used in the library into several properties, and mapping the several properties to the one or more predetermined properties.

It shall be noted that several standards, like MTP for example, do not know structured data types. It shall further be noted that a structured data type may include several variables or properties of several types which are combined into a single variable or property. The property may then have several like "child variables" or "child properties" which can be written and/or read. The MTP standard for example only knows flat types. The splitting may be understood to comprise to split the structure data type into its child properties and each of the child properties can then be mapped or assigned to an MTP property. This can also be a subset of the child properties. So there is no need to map all of the child properties.

Hence, mapping of structured data types to standard types is enabled.

According to several examples of the present disclosure, the library may further comprise a second type unmappable to a predetermined type among the plurality of predetermined types, and wherein the method may further comprise adding the second type to the plurality of predetermined types available in the engineering tool. Additionally, or alternatively, the one or more properties may comprise a property unmappable to a predetermined property among the one or more predetermined properties, and the method may further comprise adding the unmappable property to the one or more predetermined properties in the mapped predetermined type.

Hence, applicability of the library integration is further improved, since also unmappable or not to mapped types and/or properties may be considered.

According to several examples of the present disclosure, the engineering tool may be a modular engineering tool; the library may be an industry-specific library or a customer-specific library; the predetermined library may be a standard library; the predetermined type may be a standard type; the predetermined library object may be a standard library object; the predetermined property may be a standard property.

It shall be noted that the related standard may be at least one of:
- Asset Administration Shell;
- Open Process Automation Standard - O-PAS Standard;
- PackML - ISA-TR88.00.02-2022;
- PA-DIM - Process Automation Device Information Model;
- OPC UA FX - OPC UA for Field eXchange (FX); and
- Module Type Package (MTP) - VDI/VDE/Namur 2658.

Hence, applicability with several different standards, for example with the MTP standard, is enabled. Thus, acceptability of users or engineers is increased.

According to a second aspect, there is provided a method for integrating a library object into a predetermined description in industrial plant. The method comprises, for a library comprising a first type and integrated into an engineering tool according to the method of the first aspect: Deriving, from the mapped predetermined type according to the method of the first aspect, a third type comprising the mapped predetermined type and the first type. The third type comprises the one or more library objects of the first type and the one or more predetermined library objects of the mapped predetermined type. The method further comprises connecting the predetermined library objects of the mapped predetermined type to the library objects of the third type, based on the mapping of the one or more properties according to the method of the first aspect.

The deriving may comprise automatically deriving. The connecting may comprise automatically connecting.

The method according to the second aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to several examples of the present disclosure, the connecting may comprise:
- connecting a predetermined library object of the mapped predetermined type to a library object of the first type comprised in the third type; and
- connecting the predetermined library object of the mapped predetermined type to a predetermined library object of the mapped predetermined type comprised in the third type.

Hence, the integration is further improved and both is enabled at the same time, usage of an industry-specific or customer-specific library (or type) and usage of a standard library (or type).

According to a third aspect, there is provided a method for generating a process control system including a library comprising a first type, the library integrated into an engineering tool according to the method of the first aspect and library objects of the library integrated according to the method of the second aspect. The method comprises generating a process control system supervisory control system structure by using the integrated library; and generating of a human machine interface (HMI) screen based on symbols of the integrated library.

It shall be noted that by the symbols of the integrated library it may be meant symbols that are associated with types and/or library objects of the integrated library. For example, for a customer-specific library, a customer-specific valve type, when displayed on the HMI screen, may be displayed by a customer-specific valve symbol. In contrast thereto, a standard valve type, when displayed on the HMI screen, may be displayed by a standard valve symbol.

The method according to the third aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to several examples of the present disclosure, the generating the process control system supervisory control system structure comprises generating control code for execution of control for modules of the engineering tool, and instantiating and connecting blocks from the integrated library to a control specification in the engineering tool.

It shall be noted that a block may represent a group or arrangement of library objects. A block may represent one or more types.

Hence, applicability of the integrated library is further improved.

According to a fourth aspect, there is provided a data processing apparatus in industrial plant, the data processing apparatus comprising a processor being configured to carry out the method of the first aspect, and/or the method of the second aspect, and/or the method of the third aspect.

The data processing apparatus according to the fourth aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to a fifth aspect, there is provided a data processing system in industrial plant. The data processing system comprising a first data processing apparatus of the fourth aspect configured to carry out the method of the first aspect and/or comprising a second data processing apparatus of the fourth aspect configured to carry out the method of the second aspect and/or comprising a third data processing apparatus of the fourth aspect configured to carry out the method of the third aspect. The first to third data processing apparatuses are communicatively connected to each other. Additionally, or alternatively, the data processing system comprising means for carrying out the method of the first aspect, and/or the method of the second aspect, and/or the method of the third aspect.

The data processing system according to the fifth aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to a sixth aspect, there is provided an industrial plant comprising at least one of the first to third data processing apparatuses of the fourth aspect and/or the data processing system of the fifth aspect.

By "industrial plant", according to several examples, it may be meant an industrial plant or industrial production plant comprising one or more pipelines, production lines and/or assembly lines for transforming one or more educts into a product and/or for assembling one or more components into a final product. According to several examples, it may be meant an industrial plant in oil industry, in gas industry, in mining industry, in chemical industry, in wind and power industry, or in food and beverage industry.

The industrial plant according to the sixth aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to a seventh aspect, there is provided a computer-readable medium comprising instructions which, when executed by a computing system, cause the computing system to perform the method of the first aspect, and/or the method of the second aspect, and/or the method of the third aspect. The computer-readable medium may be transitory or non-transitory, volatile or non-volatile.

The computer-readable medium according to the seventh aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to an eighth aspect, there is provided a computer program product comprising instructions which, when executed by a computing system, enable or cause the computing system to perform the method of the first aspect, and/or the method of the second aspect, and/or the method of the third aspect. The computer program product may comprise a computer-readable medium comprising instructions of the computer program product.

The computer program product according to the eighth aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

According to a ninth aspect, there is provided a use of at least one of the first to third data processing apparatuses of the fourth aspect, and/or of the data processing system of the fifth aspect, and/or of the industrial plant of the sixth aspect, and/or of the computer-readable medium of the seventh aspect, and/or of the computer program product of the eighth aspect.

The use according to the ninth aspect is advantageous in that it may participate in enabling to allow an engineer to integrate a needed library into engineering tools, and to still create standard-compliant descriptions, for example standard-compliant MTP descriptions. Thus, there is a benefit that there is the possibility to use industry-specific libraries and/or customer-specific libraries and to still be standard compliant, for example MTP compliant. This means in a possible later control system upgrade that at least the standard specific parts, for example MTP specific parts, can be reused and that only the industry library-specific parts and/or the customer library-specific parts need to be reworked.

Optional features of the first to third aspects may form part of any of the fourth to ninth aspects, mutatis mutandis.

The methods of the first to the third aspects may be at least in parts computer implemented.

The computer-readable medium of the seventh aspect may have stored thereon the computer program product of the eighth aspect.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a workflow for library integration according to several examples of the present disclosure;
- Figure 2 illustrates an example for library selection and import according to several examples of the present disclosure;
- Figure 3 illustrates an example for type mapping and property mapping of library objects according to several examples of the present disclosure;
- Figure 4 illustrates an example for engineering tool integration according to several examples of the present disclosure;
- Figure 5 illustrates an inheritance hierarchy for custom types in MTP according to several examples of the present disclosure;
- Figure 6 illustrates a flowchart indicative of a method according to several examples of the present disclosure;
- Figure 7 illustrates a flowchart indicative of a method according to several examples of the present disclosure;
- Figure 8 illustrates a flowchart indicative of a method according to several examples of the present disclosure;
- Figure 9 shows a block diagram schematically illustrating a data processing apparatus according to several examples of the present disclosure;
- Figure 10 shows a block diagram schematically illustrating a data processing apparatus according to several examples of the present disclosure;
- Figure 11 shows a block diagram schematically illustrating a data processing apparatus according to several examples of the present disclosure; and
- Figure 12 illustrates an example for a process control system supervisory control system structure.

### DETAILED DESCRIPTION

It shall be noted that the present disclosure is applicable on and/or compatible with several different standards, for example and without being limited to one or more of these examples:
- Asset Administration Shell - IEC 63278-1:2023 ED1: Asset Administration Shell for industrial applications;
- Open Process Automation Standard - O-PAS Standard, Version 2.1;
- PackML - ISA-TR88.00.02-2022: Machine and Unit States: An Implementation example of ISA-88.00.01;
- PA-DIM - Process Automation Device Information Model;
- OPC UA FX - OPC UA for Field eXchange (FX); and
- Module Type Package (MTP) - VDI/VDE/Namur 2658: Automation engineering of modular systems in the process industry.

In the following, for increasing readability, the MTP standard is used as an example for referring to a standard in general. Thus, in the following, when the MTP standard is mentioned as an example, the MTP standard may be understood as being replaceable by any other suitable standard, for example by any other of the above-mentioned standards.

The function modules concept that allows a modular engineering of process plants bases for example on the standard MTP library, which is only usable for a limited number of projects. In view thereof, there is need to include industry-specific and/or customer-specific libraries into the modular engineering tools.

Therefore, according to several examples of the present disclosure, there is disclosed to integrate industry-specific libraries and/or customer-specific libraries into the modular engineering tool in a way that the resulting MTP description is still standard compliant, but the look and feel, properties, etc. of the libraries then available in the modular engineering tool is like for the integrated library.

Hence, according to several examples of the present disclosure, this is achieved by an integration method that
i) allows an engineer to integrate a needed library into the engineering tools, and
ii) still creates standard-compliant MTP descriptions.

Thus, the present disclosure is about the integration of industry-specific or customer-specific libraries into the modular engineering environment and the MTP. This may include, for example, a workflow, a mapping, the actual tool integration, the MTP integration and the generation of the process control system.

Therefore, according to several examples of the present disclosure, there is disclosed a workflow that can be used to integrate a library into the modular engineering tool, to orchestrate a design of the library, to map the library to the (MTP) standard, and to derive a new Automation Markup Language (AutomationML) class that can be used to include the library into the MTP.

A benefit of such solution is the possibility to use industry-specific libraries and/or customer-specific libraries and to still be MTP compliant. This means in a possible later control system upgrade that at least the MTP specific parts can be reused and that only the industry library-specific parts and/or the customer library-specific parts need to be reworked.

In view thereof, according to several examples of the present disclosure, there is disclosed a method to integrate an industry-specific or customer-specific library into a modular engineering tool, wherein the method may comprise one or more of the following:
- Importing a library from an engineering tool into a modular engineering tool, wherein the importing may comprise importing a type of the library (or several types comprised by the library to be imported) and the properties of the library (or the properties of the one or more types). The properties of the library may be associated with properties of library objects included in the library or the/one of the type(s);
- Mapping or assigning the types of the library to the standard types of the MTP library;
- Mapping the properties of the mapped or assigned types to the properties of the mapped or assigned MTP standard type; and
- Integrating the library into the model-based control engineering and the tag list engineering of the modular engineering tool.

Moreover, according to several examples of the present disclosure, there is disclosed a method to integrate custom library objects into the MTP description without losing standard compliance, wherein the method may comprise one or more of the following:
- Automatic derivation of a new type in the generated MTP file representing a combination of the type of the integrated library and of the mapped standard type (the derived new type may be understood to represent a "child type" derived from the mapped standard type which may be understood to represent a corresponding "mother type"); and
- Automatic connection of the standard properties to the mapped properties of the new type in the MTP.

Moreover, according to several examples of the present disclosure, there is disclosed a method to generate a process control system, which includes the corresponding industry-specific or customer-specific library, wherein the method may comprise one or more of the following:
- Generating the process control system supervisory control system structure using the integrated library; and
- Generating of the human machine interface (HMI) screens, based on symbols and/or faceplates of the integrated library.

In the following, according to several examples of the present disclosure, a workflow of library integration is outlined in detail.

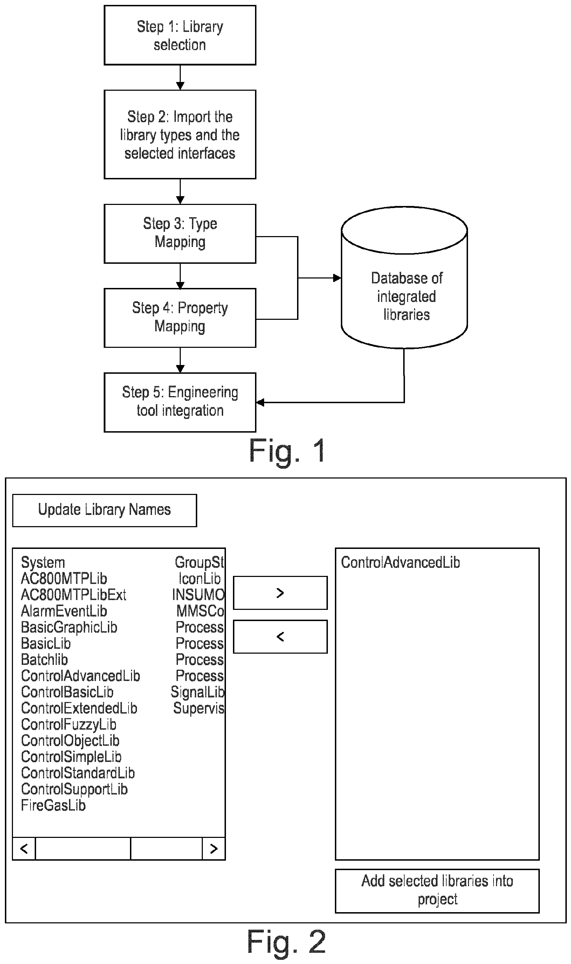

Namely, the proposed workflow may consist of five steps, Step 1 to Step 5, as indicated in Figure 1 for example.

In Step 1, an interface may be provided to a given engineering environment, which is used to identify libraries and to import selected ones among the identified libraries into the modular engineering environment.

In Step 2, the one or more selected libraries may be imported. This may mean that at least one of the interface(s), input(s), output(s), parameter(s) and property(ies) of the one or more selected libraries are identified and are made available in the modular engineering tool. Since those are usually very much per type, a user can select which inputs, outputs and parameters shall be made available in the engineering environment.

By property it may be meant a specific value of a library object. This might for example be a value of a process flow, the speed of a pump, or a parameter of a service, or similar. The property may be defined in the type (i.e. in the library object) and the value is specific to the instance of the type (i.e. of an actual object). The term parameter may be used as a synonym for the term property, wherein parameters may be used for those properties that are inputs and outputs of the type. However, handling and representation of a parameter is actually the same like with a property. Hence, a parameter may be understood as a property that is used as input or output of the library function, whereas a property may be understood as a predetermined or preset criterion, like a measurement range for example

In Step 3, the types may be mapped to or assigned to MTP standard types. A valve type from a library to be integrated for example may be assigned to "AnaVlv" or "MonAnaVlv".

Based thereon, i.e. based on the type mapping in Step 3, it is enabled in Step 4 to map one or more of the properties between the two types, i.e. the to be integrated type and the MTP type. Since the MTP types are very down stripped types, like basic or simple types, it may be assumed that the MTP standard type properties constitute a subset of the properties of the industry-specific or customer-specific type. If there is something missing, i.e. if a MTP standard type property is not to be assigned or mapped to an industry-specific or customer-specific type property or does not have any correspondences to an industry-specific or customer-specific type property, the MTP standard type property can be assigned to a constant value, which is allowed according to the MTP standard.

In an extended version of this Step 4, according to several examples of the present disclosure, a more complex mapping could be thought of as combining or separating ports during the mapping process, as applying simple formulas, like to adapt a range for example, or as negating a port.

Both mappings of Step 3 and Step 4, i.e. the results obtained from the mappings, can be stored in a database or file for example, and can later be reused in other projects, as well.

Afterwards, in Step 5, the library can be integrated into the engineering environment. Here, the engineer can now see the new customer-specific or industry-specific types, their corresponding properties and can use those in engineering.

Once a function module may be engineered, the MTP may be generated, which is still standard-compliant, as outlined below in more detail. Based on the MTP, the process control system automation code can be generated in the same way as today, by simply taking the other library elements or library objects (i.e. library objects already available before the library integration) that are already present in the process control environment.

In the following, according to several examples of the present disclosure, Steps 1 to 4 as indicated above with reference to Figure 1, i.e. library selection, import, and mappings, are outlined in more detail.

In Step 1, a user can select the libraries that are needed. To provide those to the user, the Application Programming Interfaces (APIs) of engineering tools containing the needed libraries are used. The libraries are read from the engineering tools and the user may select the libraries he wants to integrate into the modular engineering tool. An example how this may look like is shown in Figure 2, where it is indicated as an example that the library "ControlAdvancedLib" is selected to be added into a project (i.e. to be integrated into a corresponding engineering tool) from a list showing several available libraries (library names).

After the selection, in Step 2, the user may import the types (included in the one or more selected libraries) and the type interfaces (associated with the respectively imported types) automatically to the modular engineering tool. An interface contains the inputs and/or the outputs of one or more of the types, as well as the parameters and/or properties associated with the one or more of the types. It shall be noted that an internal behavior of the types is not imported.

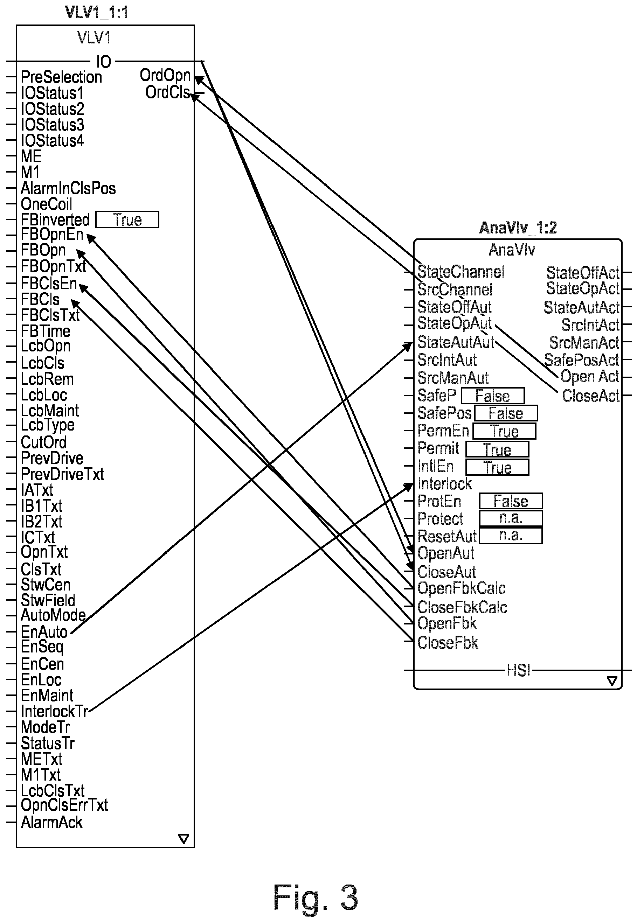

In Step 3, every type of the library can then be mapped to a standard MTP type. This means, for example, that a control block for a valve (wherein the control block may be understood as comprising one or more library objects related to the valve and included in a type, for example a valve type, of the library) is mapped to the corresponding library object (CMD hereafter) of the MTP. An example is shown in Figure 3, which illustrates that an industry-specific type "VLV" is mapped to the MTP standard type "AnaVlv". For example, it is indicated in Figure 3 that the library object "EnAuto" from the industry-specific type "VLV1_1:1" is mapped to the library object "StateAutAut" from the MTP standard type "AnaVlv_1:2". Further, for example, the library object "CloseFbk" from the MTP standard type "AnaVlv_1:2" is mapped to the library object "FBCls" from the industry-specific type "VLV1_1:1".

Afterwards, i.e. after the type mapping, the properties, inputs, and/or outputs can further be mapped in Step 4. This is also shown in the given example of Figure 3. Since the industry-specific type may usually contain more inputs, outputs, and/or properties than the MTP type, it may be assumed that the MTP type can be seen as a subset of the industry-specific type. Anyway, the MTP type may need to have a complete mapping, assignment or specification of the inputs, outputs, and/or properties. Thus, if a property of the MTP type does not exist in the industry-specific type for example (i.e. no mapping may be made for the property or the property is not mappable/unmappable), to this property a constant value may be assigned.

According to several examples of the present disclosure, structured data types that are often used in industry-specific libraries need to be split into several properties in order to make those mappable to the standard MTP type. MTP does not know structured data types.

It shall be noted that a structured data type includes several properties or variables of several types which are combined into a single property or variable. The property has then several like "child properties" or "child variables" which can be written and/or read. The MTP standard only knows flat types. The splitting comprises to split the structure data type into its child properties and each of the child properties can then be mapped or assigned to an MTP property. This can also be a subset of the child properties. So there is no need to map all of the child properties.

Industry-specific types that may have no representation in the MTP standard types (i.e. an industry-specific type may be unmappable to any of MTP standard types) may simply be added to the module engineering tool, without mapping the type and/or the properties to a MTP standard type and/or MTP standard properties. This might be the case for special control functions, like split range control, or arithmetic function blocks for example.

The type mapping and the attached property mapping (i.e. result of these mappings or mapping processes) may be stored in a database or file for example, in order to make those mappings available for other engineers using the same industry-specific library. In such case, the mapping(s) can just be reused and there is no need to do the mapping(s) again.

In the following, according to several examples of the present disclosure, Step 5 as indicated above with reference to Figure 1, i.e. library integration into the engineering tooling, is outlined in more detail.

Namely, the industry-specific library may be integrated into the engineering environment, i.e. the environment of the modular engineering tool, as well. The properties of the used industry-specific types shall be usable in the engineering environment, i.e. in the modular engineering tool or in a desired project (as indicated in Figure 2) for example, and the engineer shall be able to do the engineering based on the industry-specific library and not based on the MTP standard library.

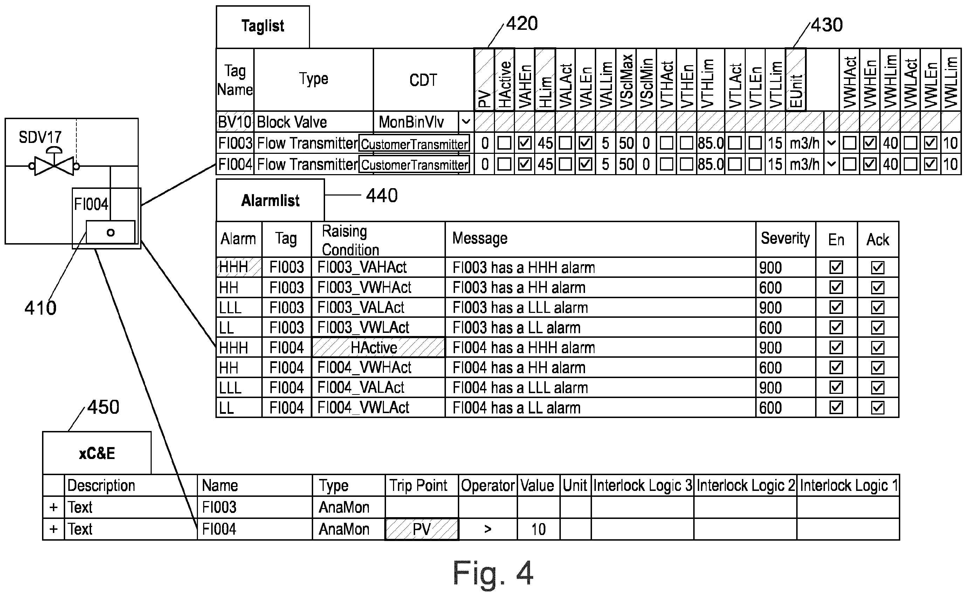

In order to do this, based on the type mapping as outlined above, symbols used in an HMI are bound to the corresponding industry-specific type. Figure 4 shows an example for a transmitter, i.e. an example for engineering tool integration according to several examples of the present disclosure. A symbol 410 of the transmitter (Tag Name FI004 as indicated in Figure 4 as an example) is not bound to the MTP AnaView type, but to a customer-specific Transmitter type (for example CustomerTransmitter as indicated in Figure 4 as an example). Customer-specific transmitters properties may have different names and are usually more than the ones from a corresponding MTP standard type. In the example shown in Figure 4, a standard library object "V" is for example called "PV" 420 in the customer-specific type or a standard library object "Unit" is called "EUnit" 430 in the customer-specific type. Properties that exist in the customer-specific or industry-specific library and that do not exist in the standard MTP library can be added to the list of properties, as well.

It shall be mentioned that a user may have the ability to configure which properties shall be shown in the engineering environment, i.e. in the list, and which are not shown, since usually industry-specific blocks (i.e. blocks of one or more library objects) provide hundreds of properties.

According to several examples of the present disclosure, in the alarm 440 list as illustrated in Figure 4 as an example (the alarm list 440 may be understood to represent a certain list comprising certain properties available in the engineering environment), as well as the cause-and-effect tables 450 (xC&E as illustrated in Figure 4 as an example) (available in the engineering environment) for specification of the control logic and the alarms, the properties of the industry-specific libraries may be used, as well. Depending on at least one of a property type, an input, and an output, one or more of those may be added as cause or effect. For example, for an event like alarms for example, the mapped properties for alarm signals, i.e. the properties form the customer-specific library properties mapped to standard MTP library properties related to alarm signals, are used to generate the alarm list.

A result thereof may be that the engineering environment is adapted, on the fly, to the industry-specific library, in case one or more mappable industry-specific types exist. For non-existing types, i.e. for a standard MTP type(s) to which no corresponding industry-specific type(s) is mappable or assignable, the standard MTP type(s) can still be used. It shall be noted that by on the fly it may be meant immediately, so the properties of the types from the library are added to the different editors (alarms, tag list, C&E, etc.) as soon as the library is integrated.

For types included in the industry-specific library, but which have no expression (i.e. no mappable or assignable expression) in the standard MTP library, such types may simply be added to the engineering environment, as well. Of course, then a new symbol may be needed for such added types, which, i.e. the symbol, may need to be added to the engineering environment, as well. This may be a manual task.

In the following, according to several examples of the present disclosure, a description of integrated industry-specific or customer-specific types and corresponding library objects in the MTP is outlined in more detail.

According to several examples of the present disclosure, there is need to further consider a description of the integrated types and the instantiated library objects in the MTP. To do so, for every type that is integrated and mapped to an MTP type, a new type may be derived from the mapped MTP type, wherein the derived new type is representing the industry-specific type. It shall be noted that the "deriving" may be a deriving as understood from the principle of object orientation. The derived type may represent a child type and may contain all properties and/or library objects of the mother type, i.e. the mapped MTP type. The derived type further adds or includes all properties and/or library objects from the industry-specific type. This means, that some properties and/or library objects might be present two times in the resulting new type: 1) an original property and/or library object from the mapped MTP type, and 2) a property and/or library object that is mapped to the property and/or library object of the mapped MTP type.

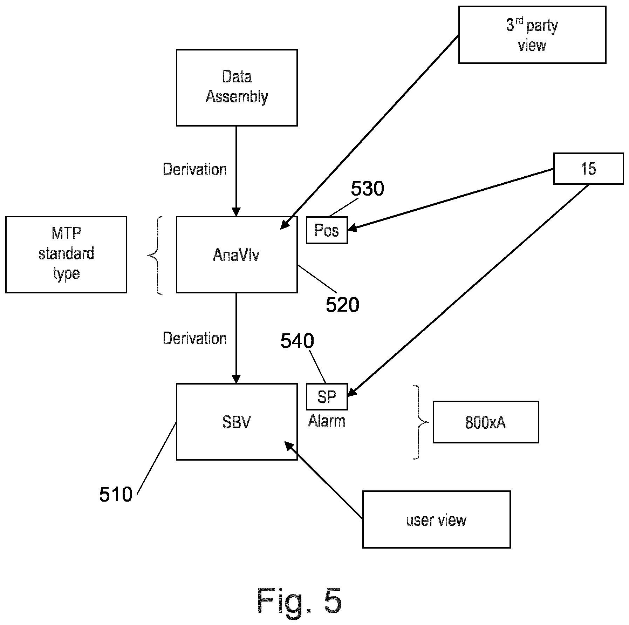

Figure 5 illustrates an inheritance hierarchy for custom types in MTP according to several examples of the present disclosure, and, in doing so, shows an example for a valve. In Figure 5, an industry-specific type is called SBV 510 and the MTP type is called AnaVIv 520. SBV 510 is derived from AnaVlv 520 as indicated above. The property "Pos" 530 from the MTP type/AnaVlv 520 for example is mapped to the property "SP" 540 from the industry-specific type/SBV 510. Thus, the type resulting from the deriving contains the before properties "Pos" and "SP", which contain the same information "15", in the example shown in Figure 5, for example an opening degree of 15% of a valve.

The properties for the industry-specific type/SBV 510 are populated in the same way as for normal MTPs, i.e. for example for unmapped MTPs without library integration. This means, property values to be populated are gotten from a tag list (as indicated in Figure 4 for example) available in the engineering environment and added in the MTP, to the object that is of the type SBV. Additionally, the properties derived from the standard type are populated with the values gotten from the tag list. By the object it is meant an instance created from the SBV 510. For example, meaning when a valve is used in the engineering, the engineer creates an instance of the type SBV. This "object" then contains all the properties from SBV 510.

It shall be noted that populated may mean "filled", so information is added or filled in to an MTP file for example.

According to several examples of the present disclosure, this concept can then be used to integrate the process unit or process function using the industry library into system 800xA, using the MTP, since all needed properties for the industry-specific or customer-specific library are included. But in addition, the process unit can still be integrated into a third-party system, using the standard MTP type, of course, which has less information than the industry-specific type. This means, both views are provided, a user internal view, as well as the standard MTP view.

Unmapped industry-specific types may simply be integrated in a standard like MTP for example using a derivation of the industry-specific type from a generic type, for example from the abstract MTP type DataAssembly (which is the most generic type in the MTP library). Those cannot be integrated into a third-party system but are still usable with a user system that contains the library.

In the following, according to several examples of the present disclosure, a description of a generation of the process control system with the industry-specific library is outlined in more detail.

Namely, further to the process steps already outlined above in detail, the generation of the process control system may then be realized as follows. There are two parts that may be generated:
a) a control code for executing the control for the process unit, process function or modules, and
b) a supervisory control, including the structure, HMI, etc.

For a), blocks from the industry-specific library are instantiated and connected according to a control specification in the modular engineering tool. A block may represent one or more type and may comprise one or more library objects. Since the industry-specific library is imported from a given engineering environment and the modular engineering tool may only know the interfaces of the given engineering environment, the same library must be used for the control of the modules. Of course, the target system independency is lost. Regarding MTP for example, the MTP is a standard that is structured in a way that it can be used independently of the automation system that is inside a module. If it is an automation system from a first automation vendor or an automation system from a second automation vendor does not matter, the MTP can be used. But this is only valid if only the standard types are used. Once the industry specific types are used, the module control code cannot easily be ported from the first automation vendor to the second automation vendor or within the first automation vendor between different control system families.

For b), again the symbols, faceplates, etc. from the integrated industry-specific library are used. Usually, those already contain the corresponding visualization items, alarm lists for the library objects, etc. Within the HMI, the symbols can be placed based on the MTP description, as before. The look and feel are then automatically the same for all process unit, process function or function modules.

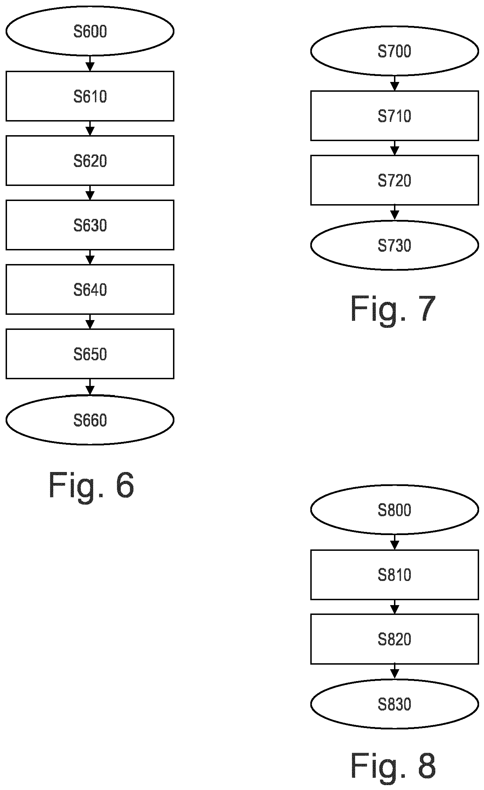

Referring now to Figure 6, Figure 6 illustrates a flowchart indicative of a method according to several examples of the present disclosure. The method is a method for integrating a library into an engineering tool in industrial plant.

The method according to Figure 6 may comprise and/or represent at least part of the method or method steps as outlined above with reference to Figure 1.

The method starts in S600.

In S610, the method comprises selecting the library comprising a first type, the first type comprising one or more library objects associated with one or more properties.

In S620, the method comprises importing the selected library into the engineering tool. In S630, the method comprises mapping the first type to a predetermined type among a plurality of predetermined types available in one or more predetermined libraries in the engineering tool.

In S640, the method comprises mapping the one or more properties to one or more predetermined properties associated with one or more predetermined library objects in the mapped predetermined type.

In S650, the method comprises, based on the mappings, integrating the library into the engineering tool.

The method ends in S660.

Referring now to Figure 7, Figure 7 illustrates a flowchart indicative of a method according to several examples of the present disclosure. The method is a method for integrating a library object into a predetermined description in industrial plant.

The method according to Figure 7 may comprise and/or represent at least part of the method or method steps as outlined above with reference to Figure 1.

The method starts in S700.

In S710, the method comprises, for a library comprising a first type and integrated into an engineering tool according to the method of Figure 6, deriving from the mapped predetermined type a third type comprising the mapped predetermined type and the first type, the third type comprising the one or more library objects of the first type and the predetermined library objects of the mapped predetermined type.

In S720, the method comprises connecting the predetermined library objects of the mapped predetermined type to the library objects of the third type, based on the mapping of the one or more properties according to the method of Figure 6.

The method ends in S730.

Referring now to Figure 8, Figure 8 illustrates a flowchart indicative of a method according to several examples of the present disclosure. The method is a method for generating a process control system including a library comprising a first type and the library integrated into an engineering tool according to the method of Figure 6 and/or of Figure 7.

The method according to Figure 8 may comprise and/or represent at least part of the method or method steps as outlined above with reference to Figure 1.

The method starts in S800.

In S810, the method comprises generating a process control system supervisory control system structure by using the integrated library.

In S820, the method comprises generating of a human machine interface, HMI, screen based on symbols of the integrated library.

The method ends in S830.

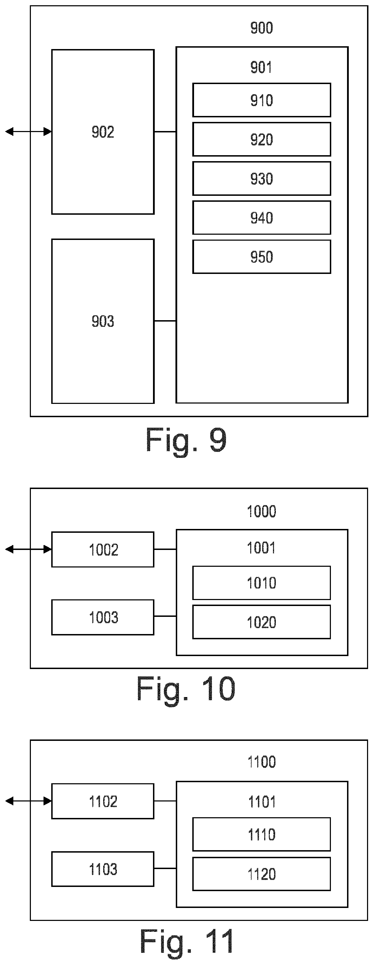

Referring now to Figure 9, Figure 9 shows a block diagram schematically illustrating a data processing apparatus 900 according to several examples of the present disclosure. In particular, according to several examples of the present disclosure, there is provided a data processing apparatus 900 for integrating a library into an engineering tool in industrial plant. The data processing apparatus 900 comprises a processor 901 being configured to carry out at least part of the method of Figure 1 and/or of Figure 6.

In more detail, according to various examples, a data processing apparatus 900 being configured to carry out the method of Figure 6 may comprise a processing circuitry, a processing function, a processing means, a processing unit or a processor 901, which enables the data processing apparatus 900 to participate in integrating a library into an engineering tool in industrial plant. The processor 901 may comprise one or more processing portions or functions, wherein the processing portions or functions may be provided as one or more physical or virtual entities. The data processing apparatus 900 may comprise one or more communication interfaces 902. The data processing apparatus 900 may further comprise a memory or memory unit 903 for storing data, programs and/or instructions to be executed by the processor. The memory 903 may be a memory internal to the data processing apparatus 900 or may be a memory external to the data processing apparatus 900, for example at a cloud server. The processor 901 may comprise one or more portions, which enable the data processing apparatus 900 to execute at least part of the method of Figure 1 and/or Figure 6, for example. According to several examples of the present disclosure, a selecting portion 910 may be configured to perform such selecting according to S610 of Figure 6, an importing portion 920 may be configured to perform such importing according to S620 of Figure 6, a mapping portion 930 may be configured to perform such mapping according to S630 of Figure 6, a mapping portion 940 may be configured to perform such mapping according to S640 of Figure 6, and an integrating portion 950 may be configured to perform such integrating according to S650 of Figure 6.

Referring now to Figure 10, Figure 10 shows a block diagram schematically illustrating a data processing apparatus 1000 according to several examples of the present disclosure. In particular, according to several examples of the present disclosure, there is provided a data processing apparatus 1000 for integrating a library object into a predetermined description in industrial plant. The data processing apparatus 1000 comprising a processor 1001 being configured to carry out the method of Figure 7.

In more detail, according to various examples, a data processing apparatus 1000 being configured to carry out the method of Figure 7 may comprise a processing circuitry, a processing function, a processing means, a processing unit or a processor 1001, which enables the data processing apparatus 1000 to participate in integrating a library object into a predetermined description in industrial plant. The processor 1001 may comprise one or more processing portions or functions, wherein the processing portions or functions may be provided as one or more physical or virtual entities. The data processing apparatus 1000 may comprise one or more communication interfaces 1002. The data processing apparatus 1000 may further comprise a memory or memory unit 1003 for storing data, programs and/or instructions to be executed by the processor. The memory 1003 may be a memory internal to the data processing apparatus 1000 or may be a memory external to the data processing apparatus 1000, for example at a cloud server. The processor 1001 may comprise one or more portions, which enable the data processing apparatus 1000 to execute the method of Figure 7, for example. According to several examples of the present disclosure, a deriving portion 1010 may be configured to perform such deriving according to S710 of Figure 7, and a connecting portion 1020 may be configured to perform such connecting according to S720 of Figure 7.

Referring now to Figure 11, Figure 11 shows a block diagram schematically illustrating a data processing apparatus 1100 according to several examples of the present disclosure. In particular, according to several examples of the present disclosure, there is provided a data processing apparatus 1100 for generating a process control system including a library comprising a first type and the library integrated into an engineering tool according to the method of any of Figures 1, 6 and 7. The data processing apparatus 1100 comprising a processor 1101 being configured to carry out the method of Figure 8.

In more detail, according to various examples, a data processing apparatus 1100 being configured to carry out the method of Figure 8 may comprise a processing circuitry, a processing function, a processing means, a processing unit or a processor 1101, which enables the data processing apparatus 1100 to participate in generating a process control system in industrial plant. The processor 1101 may comprise one or more processing portions or functions, wherein the processing portions or functions may be provided as one or more physical or virtual entities. The data processing apparatus 1100 may comprise one or more communication interfaces 1102. The data processing apparatus 1100 may further comprise a memory or memory unit 1103 for storing data, programs and/or instructions to be executed by the processor. The memory 1103 may be a memory internal to the data processing apparatus 1100 or may be a memory external to the data processing apparatus 1100, for example at a cloud server. The processor 1101 may comprise one or more portions, which enable the data processing apparatus 1100 to execute the method of Figure 8, for example. According to several examples of the present disclosure, a generating portion 1110 may be configured to perform such generating according to S810 of Figure 8, and a generating portion 1120 may be configured to perform such generating according to S820 of Figure 8.

According to several examples of the present disclosure, the respective portions of the data processing apparatuses 900 to 1100 may also be understood as means for carrying out the certain function.

According to several examples of the present disclosure, there is provided a data processing apparatus, which comprises a processor that is configured to carry out the methods according to Figures 6 to 8. For example, such data processing apparatus may comprise such portions 910 to 1120 as outlined above with reference to Figures 9 to 11.

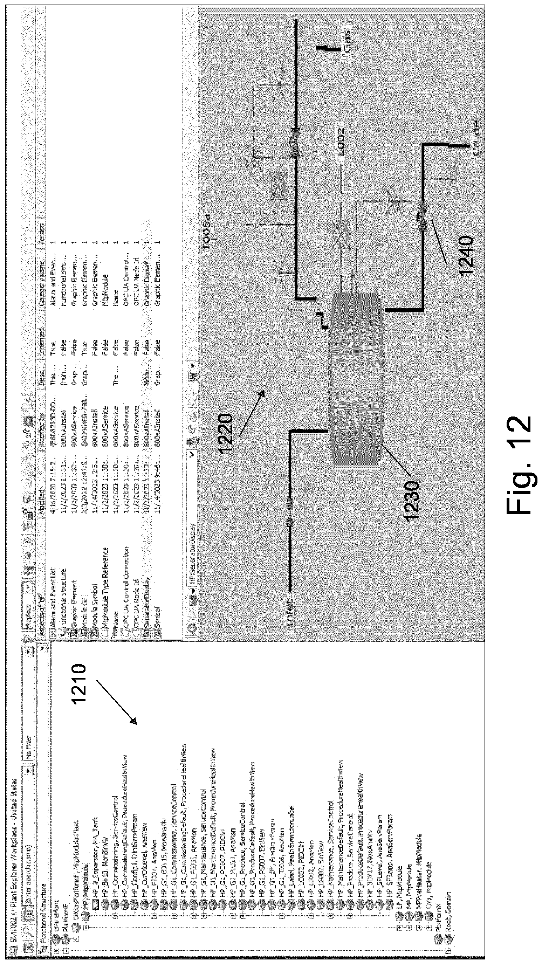

Referring now to Figure 12, Figure 12 illustrates an example for a process control system supervisory control system structure, which may be generated in S810 as outlined above with reference to Figure 8. There is indicated a structure 1210 which comprises several library objects and which is obtained from and/or provided by the integrated library, wherein at least part of the structure 1210 is shown as an image or topology image 1220. The symbols, for example symbol 1230, which indicates a tank, and symbol 1240, which indicates a valve connected to the tank, are obtained from and/or provided by the integra library. These symbols 1230 and 1240 may be different from a standard tank symbol and a standard valve symbol.

According to several examples of the present disclosure, there is provided a data processing system in industrial plant. The data processing system comprising the data processing apparatus 900 according to Figure 9 and/or comprising the data processing apparatus1000 according to Figure 10 and/or comprising the data processing apparatus 1100 according to Figure 11. The data processing apparatuses 900 to 1100 are communicatively connected to each other. Additionally or alternatively, the data processing system comprises means for carrying out the method according to any of Figures 1, 6, 7 and/or 8.

According to several examples of the present disclosure, there is provided an industrial plant comprising the data processing apparatus 900 according to Figure 9 and/or comprising the data processing apparatus1000 according to Figure 10 and/or comprising the data processing apparatus 1100 according to Figure 11. Additionally or alternatively, the industrial plant comprises the data processing system as outlined above.

According to several examples of the present disclosure, there is provided a computer-readable medium comprising instructions which, when executed by a computing system, causes the computing system to perform the method according to any of - Figures 1, 6, 7 and 8. The computer-readable medium may be transitory or non-transitory, volatile or non-volatile.

According to several examples of the present disclosure, there is provided a computer program product comprising instructions which, when executed by a computing system, enable or cause the computing system to perform the method according to any of -Figures 1, 6, 7 and 8. The computer program product may comprise a computer-readable medium comprising instructions of the computer program product.

According to several examples of the present disclosure, there is provided a use of a at least one of the data processing apparatuses 900 to 1100 and/or of the data processing system as outlined above and/or of an industrial plant as outlined above and/or of the computer-readable medium as outlined above and/or of the computer program product as outlined above.

The method according to any of Figures 1, 6, 7, and 8 may be at least in parts computer implemented.

The mapping steps according to the methods of Figure 1 and/or Figure 6 may be performed by a user based on a user knowledge.

Optional features of the method according to any of Figures 1, 6, 7 and 8 may form part of any of the data processing apparatuses 900 to 1100, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for integrating a library into an engineering tool in industrial plant, the method comprising:
selecting (S610) the library comprising a first type, the first type comprising one or more library objects associated with one or more properties;
importing (S620) the selected library into the engineering tool;
mapping (S630) the first type to a predetermined type among a plurality of predetermined types available in one or more predetermined libraries in the engineering tool;
mapping (S640) the one or more properties to one or more predetermined properties associated with one or more predetermined library objects in the mapped predetermined type; and
based on the mappings, integrating (S650) the library into the engineering tool.

2. The method according to claim 1, wherein the mapping the one or more properties comprises, if a predetermined property among the one or more predetermined properties remains unmapped to one of the one or more properties, assigning a constant value to the unmapped predetermined property.

3. The method according to claim 1 or 2, further comprising storing at least one of the mappings.

4. The method according to any one of claims 1 to 3, wherein the importing the selected library comprises importing the first type and a first type interface, wherein the first type interface is indicative of at least one of inputs of the first type, outputs of the first type, one or more parameters associated with the first type, and the one or more properties associated with the first type.

5. The method according to any one of claims 1 to 4,
wherein the library comprises a plurality of types including the first type, wherein each type among the plurality of types comprises one or more library objects associated with one or more properties; and
wherein the mappings comprise mapping the plurality of types to one or more of the predetermined types, and mapping the one or more properties for the plurality of types.

6. The method according to any one of claims 1 to 5, wherein the mapping the one or more properties comprises splitting structured data types used in the library into several properties, and mapping the several properties to the one or more predetermined properties.

7. The method according to any one of claims 1 to 6,
wherein the library further comprises a second type unmappable to a predetermined type among the plurality of predetermined types, and
wherein the method further comprises adding the second type to the plurality of predetermined types available in the engineering tool;
and/or
wherein the one or more properties comprises a property unmappable to a predetermined property among the one or more predetermined properties, and
wherein the method further comprises adding the unmappable property to the one or more predetermined properties in the mapped predetermined type.

8. The method according to any one of claims 1 to 7,
wherein the engineering tool is a modular engineering tool;
wherein the library is an industry-specific library or a customer-specific library;
wherein the predetermined library is a standard library;
wherein the predetermined type is a standard type;
wherein the predetermined library object is a standard library object;
wherein the predetermined property is a standard property.

9. A method for integrating a library object into a predetermined description in industrial plant, the method comprising:
for a library comprising a first type and integrated into an engineering tool according to any of claims 1 to 8, deriving (S710) from the mapped predetermined type a third type comprising the mapped predetermined type and the first type, the third type comprising the one or more library objects of the first type and the one or more predetermined library objects of the mapped predetermined type; and
connecting (S720) the predetermined library objects of the mapped predetermined type to the library objects of the third type, based on the mapping of the one or more properties according to any of claims 1 to 8.

10. The method according to claim 9,
wherein the connecting comprises connecting a predetermined library object of the mapped predetermined type to a library object of the first type comprised in the third type and to a predetermined library object of the mapped predetermined type comprised in the third type.

11. A method for generating a process control system including a library comprising a first type, the library integrated into an engineering tool according to any of claims 1 to 10, the method comprising:
generating (S810) a process control system supervisory control system structure by using the integrated library; and
generating (S820) of a human machine interface, HMI, screen based on symbols of the integrated library.

12. The method according to claim 11,
wherein the generating the process control system supervisory control system structure comprises generating control code for execution of control for modules of the engineering tool, and instantiating and connecting blocks from the integrated library to a control specification in the engineering tool.

13. A data processing apparatus in industrial plant, the data processing apparatus comprising a processor being configured to carry out the method of any of claims 1 to 8, and/or of any of claims 9 or 10, and/or of any of claims 11 or 12.

14. A computer-readable medium comprising instructions which, when executed by a computing system, cause the computing system to perform the method of any of claims 1 to 8, and/or of any of claims 9 or 10, and/or of any of claims 11 or 12.

15. A computer program product comprising instructions which, when executed by a computing system, enable and/or cause the computing system to perform the method of any of claims 1 to 8, and/or of any of claims 9 or 10, and/or of any of claims 11 or 12.
